# EUROPEAN PATENT APPLICATION

(11) **EP 1 176 532 A1**
(43) Date of publication of application: **30.01.2002**
(21) Application number: 01305931.6
(22) Date of filing: 10.07.2001
(51) Int. Cl.: G06F 17/60

(54) **Methods and apparatus for providing display of information by an electronic price label based on sensed movement**

(30) Priority: 25.07.2000 US 626259
(71) Applicant: NCR INTERNATIONAL INC., Dayton, Ohio 45479 (US)
(72) Inventor: Heske, Theodore III, Suwanee, Georgia 30024 (US)
(74) Representative: Williamson, Brian

(57) **Abstract**

Techniques are described for changing information displayed by an EPL based on customer movement in an area near the EPL. The EPL includes motion sensing circuitry which senses customer movement in an area near the EPL. When no motion is present, the EPL may suitably display default information, such as price information, and then based on sensed customer movement in the area near the EPL, the EPL may display other information, such as collateral information relating to the nutritional content of an item associated with the EPL. In a presently preferred embodiment, the EPL may suitably display additional messages the longer a customer remains in the area near the EPL.

## Description

The present invention relates to improvements in EPL systems including systems and methods for an EPL to change the display content of the EPL based on the sensing of customer movement in an area near the EPL.

EPL systems typically include a plurality of EPLs for each merchandise item in a store. EPLs display the price of corresponding merchandise items on store shelves and are typically attached to a rail along the leading edge of the shelves. A store may contain thousands of EPLs to display the prices of the merchandise items. The EPLs are coupled to a central server where information about the EPLs is typically maintained in an EPL data file which contains EPL identification information and EPL merchandise item information. The central server sends messages, including price change messages, to the EPLs.

As EPLs are found in increasing numbers at retail establishments, the display of collateral information, such as promotional information and the nutritional content of food items, for example, has emerged as an important secondary use of EPLs. Yet, typical EPLs utilize a small display which limits the amount of information that can be displayed at a given time. Therefore, it would be desirable to provide an EPL system and method that dynamically displays and rotates advertising and collateral information based on customer movement in an area near the EPL.

The present invention advantageously provides methods and apparatus to change the information displayed by an EPL based on customer movement in an area near the EPL. An EPL in accordance with the present invention includes motion sensing circuitry which senses customer movement in an area near the EPL. When no motion is present, the EPL may suitably display default information, such as price information, and then based on sensed customer movement in the area near the EPL, the EPL may display other information, such as collateral information relating to the nutritional content of an item associated with the EPL. In a presently preferred embodiment, the EPL may detect a duration of time during which a customer stays within a sensing zone and then suitably display additional messages the longer a customer remains in the area near the EPL.

According to a first aspect of the present invention, an EPL computer reads an EPL data file to determine if an EPL should dynamically display information. The EPL computer transmits a dynamic display message to an EPL associated with the item. The dynamic display message may suitably include collateral information and timing parameters relating to the display of the collateral information. Based on customer movement in an area near the EPL, the EPL then displays the collateral information utilizing the timing parameters, providing valuable information to customers who are in the process of making purchasing decisions. In a presently preferred embodiment, as customer movement in front of the EPL continues, the EPL displays additional informational messages. When customer movement ceases, the EPL may then display the default information, such as price.

According to a second aspect of the present invention there is provided an electronic price label (EPL) comprising:
a display;
motion sensing circuitry for sensing movement;
memory for storing a plurality of messages to be displayed by said display; and
circuitry for determining which of said plurality of messages is to be displayed by said display based upon motion sensing data obtained from said motion sensing circuitry.

According to a third aspect of the present invention there is provided an electronic price label (EPL) system comprising:
an EPL comprising a display, motion sensing circuitry for sensing movement, memory for storing a plurality of messages to be displayed by said display, circuitry for determining which of said plurality of messages is to be displayed by said display based upon motion sensed by said motion sensing circuitry; and
an EPL computer which sends a dynamic display message to the EPL, said dynamic display message including at least one of said plurality of messages to be displayed based upon motion sensed by said motion sensing circuitry.

According to a fourth aspect of the present invention there is provided a display method for an electronic price label (EPL) comprising the steps of:
displaying a first message on the electronic price label;
detecting motion adjacent the electronic price label; and
displaying a second message on the electronic price label when said motion has been detected.

In addition to dynamically displaying data, an EPL in accordance with the present invention may also utilize the motion sensing circuitry to reduce EPL battery consumption and collect customer movement data.

An embodiment of the present invention will now be described, by way of example, with reference to the accompanying drawings, in which:
Fig. 1 shows a block diagram of a transaction management system, including an EPL system in accordance with the present invention;
Fig. 2 is a block diagram showing data files used within a transaction establishment in accordance with the present invention;
Fig. 3 is a block diagram of an EPL in accordance with the present invention;
Fig. 4 shows a motion sensing circuit in accordance with the present invention;
Fig. 5 shows an exemplary EPL display showing a current price of an item and a series of informational messages based on customer movement in front of the EPL in accordance with the present invention; and
Fig. 6 shows a method of displaying messages by an EPL based on customer movement in an area near the EPL in accordance with the present invention.

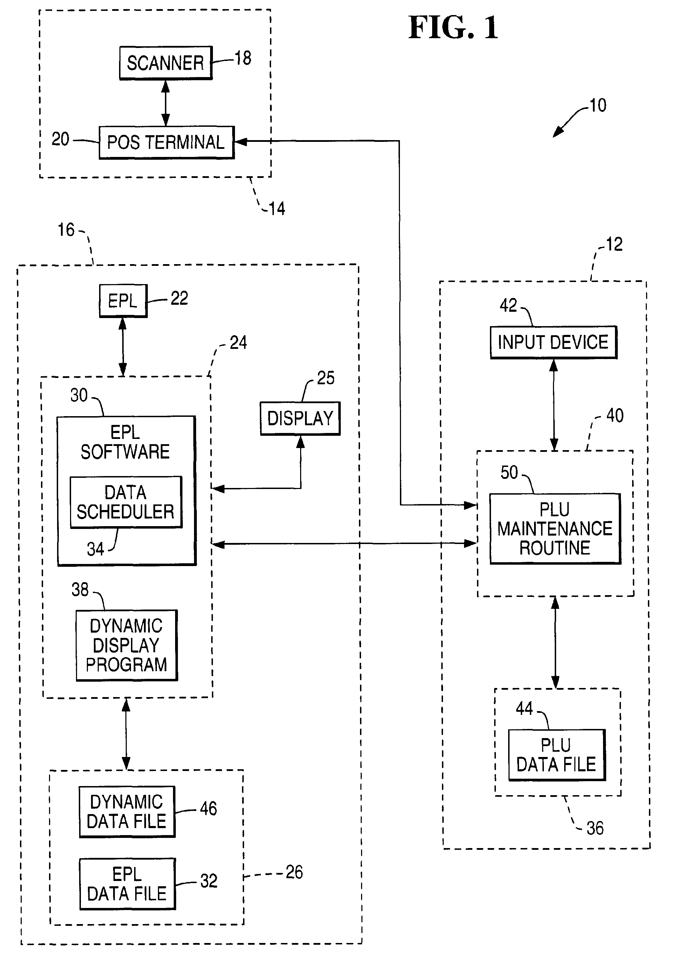

Fig. 1 shows a transaction management system 10 which includes a host computer system 12, a point-of-service (POS) system 14, and an EPL system 16. Here, components 12, 14, and 16 are shown as separate components that are networked together, but they and their subcomponents may also be combined in various ways. Thus, host computer system 12 may be a POS terminal which doubles as a host computer for a network of other POS terminals.

The host computer system 12 includes a storage medium 36, a host price look-up (PLU) terminal 40, and an input device 42. The storage medium 36 includes a PLU data file 44 which stores item prices which are available for distribution to a POS terminal 20 by the host PLU terminal 40. Alternatively, provision may be made for a bar code scanner 18 to directly access the PLU data file 44. Host PLU terminal 40 executes PLU maintenance routine 50 which updates PLU data file 44. Input device 42 is preferably a keyboard, but it will be recognized that data can be entered in a variety of alternative manners.

POS system 14 includes bar code scanner 18 and terminal 20.

EPL system 16 primarily includes EPLs 22, host EPL terminal 24, EPL storage medium 26, and display 25. EPLs are typically attached to store shelving adjacent to items. EPL storage medium contains EPL data file 32 and dynamic data file 46.

Terminals 20, 24, and 40 are shown as separate components that are networked together, but they may also be combined in different ways. For example, EPL terminal 24 and host PLU terminal may be combined to form a single host computer. POS terminal 20 and host PLU terminal may be combined to form a POS terminal which doubles as a host computer for a network of other POS terminals.

Host EPL terminal 24 executes EPL software 30, which maintains the contents of EPL data file 32. Host EPL terminal 24 also executes dynamic display program 38, described in further detail below. In an alternative embodiment, dynamic display program 38 may be combined with EPL software 30.

EPL software 30 records, schedules, and transmits all messages to EPLs 22. EPL software 30 also maintains and uses EPL data file 32, which contains item information, such as a PLU number and EPL identification information for each of the EPLs 22. EPL software 30 includes data scheduler 34 which schedules messages to EPLs 22.

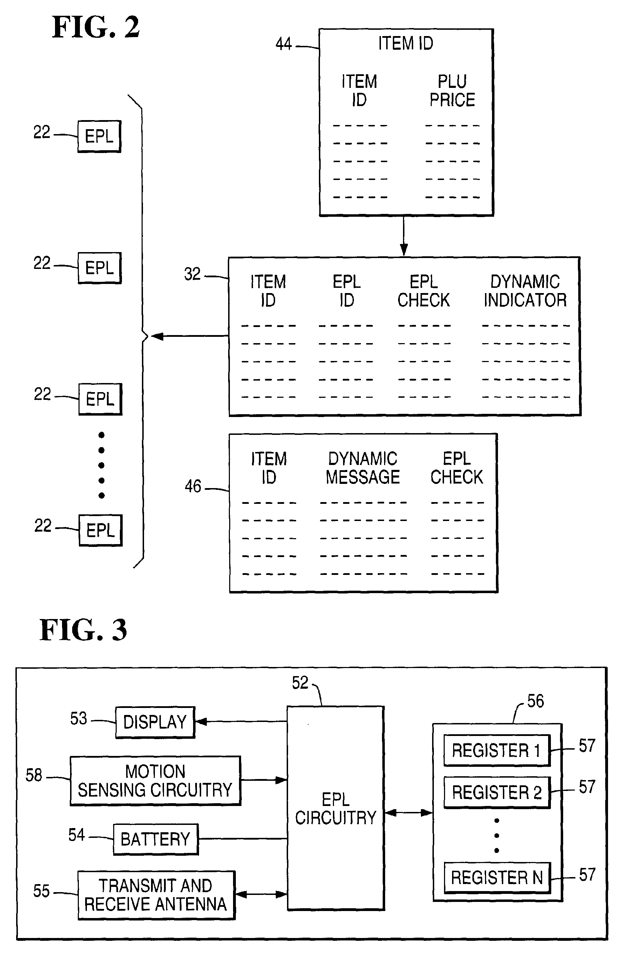

Turning now to Fig. 2, EPL data file 32, PLU data file 44 and dynamic data file 46 are shown in more detail. EPL data file 32 includes a line entry for each EPL 22 in EPL system 16. Each line entry has an item identification entry (ITEM ID), an EPL identification entry (EPL ID), entry price checksum (EPL CHECK) and a dynamic display indicator (DYNAMIC INDICATOR) entry. Entry ITEM ID identifies a store item. Entry EPL ID identifies which EPL is assigned to the item. Entry price checksum (EPL CHECK) is calculated from the price in PLU data file 44. Entry DYNAMIC INDICATOR identifies if any dynamic information is to be displayed by the EPL assigned to the item.

Dynamic data file 46 contains one or more dynamic messages (DYNAMIC MESSAGE) and corresponding timing parameters (TIME PARM) which indicate how long each dynamic message is to be displayed in the event of continued customer movement in the area near the EPL. While in a presently preferred embodiment DYNAMIC INDICATOR and TIME PARM are maintained in dynamic data file 46, display messages and timing parameters may also be maintained in a separate file.

PLU data file 44 includes a line entry for each item sold in the store. Each line entry has an item identification entry (ITEM ID) identifying a store item, and a PLU price entry (PLU PRICE) identifying the price read by POS system 14 to determine the price of each item during scanning by bar code scanner 18.

During normal operation, EPL software 30 obtains price information for an item from PLU data file 44. Data scheduler 34 schedules price change messages and other messages for transmission to EPLs. EPL software 30 controls transmission of messages to the EPLs.

In order to provide a customer with dynamically changing EPL display content, dynamic display program 38 reads EPL data file 32 to determine if an item has a DYNAMIC INDICATOR entry. If the DYNAMIC INDICATOR entry indicates that the EPL 22 assigned to the item should display dynamic information, the dynamic display program 38 causes EPL software 30 to transmit a dynamic display message to the EPL 22 associated with the item. The dynamic display message instructs the EPL to display one or more informational messages based on customer movement in the area near the EPL, as described in greater detail below.

Fig. 3 shows a block diagram of an EPL 22 in accordance with the present invention. The EPL 22 includes EPL circuitry 52, a display 53, a battery 54, a transmit and receive antenna 55, a memory device 56 and motion sensing circuitry 58. The memory device 56 includes a plurality of registers 57 which store price, promotional and other types of information to be displayed by the EPL 22. In one aspect, when a dynamic display message is received by the EPL 22, the one or more informational messages to be displayed and any associated timing parameters are stored in one or more of the registers 57. The informational messages to be displayed may suitably include nutritional content of the item, promotional information relating to the item assigned to the EPL, promotional information relating to another item, and the like. When motion sensing circuitry 58 detects motion in an area near the EPL 22, an informational message is displayed. In one aspect, as customer presence in the area near the EPL 22 continues to be detected, additional informational messages may be displayed. In a preferred embodiment, the default setting for EPL circuitry 52 is for the display of "basic" information, such as price and unit price, until a dynamic display message is received and customer movement is detected.

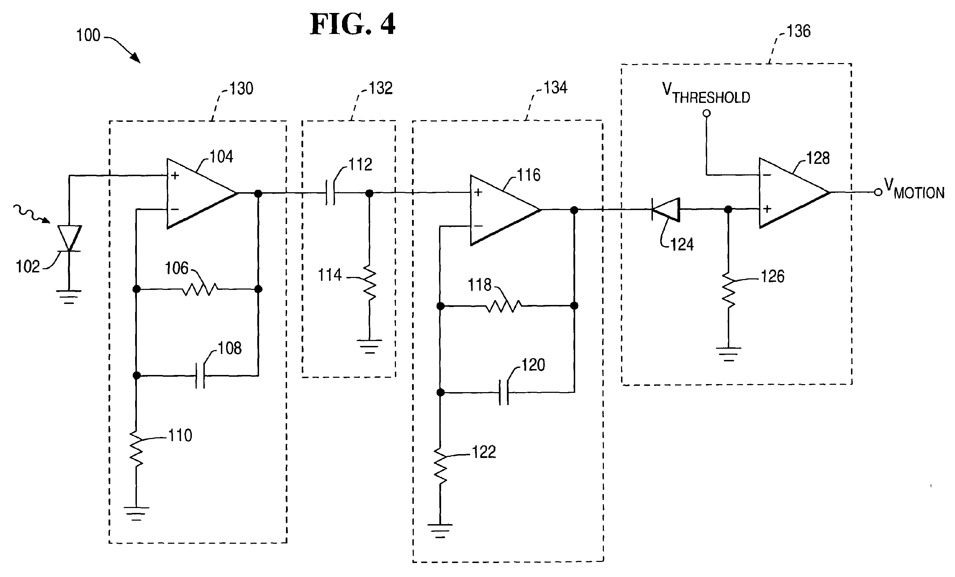

Fig. 4 shows an exemplary motion sensing circuit 100 in accordance with the present invention. The motion sensing circuit 100 includes a light sensitive photodiode 102 which is connected to a threshold circuit 136 through a low pass filter 130, a high pass filter 132 and a low pass filter 134. The low pass filter 130 includes an operational amplifier 104, a resistor 106, a capacitor 108 and a resistor 110. The high pass filter 132 includes a capacitor 112 and a resistor 114. The low pass filter 134 includes an operational amplifier 116, a resistor 118, a capacitor 120 and a resistor 122. The threshold circuit 136 includes a diode 124, a resistor 126 and an operational amplifier 129. The following table provides exemplary values for these components:

| | |
|---|---|
| Resistor 106 | 2 MΩ |
| Capacitor 108 | 0.047 µF |
| Resistor 110 | 100 kΩ |
| Capacitor 112 | 4.7 µF |
| Resistor 114 | 100 kΩ |
| Resistor 118 | 20 MΩ |
| Capacitor 120 | 1000 pF |
| Resistor 122 | 100 kΩ |
| Resistor 126 | 100 kΩ |

When movement occurs in the area near the light sensitive photodiode 102, the photodiode 102 produces a voltage signal at an input of the low pass filter 130 which then amplifies the signal with a frequency roll off determined by the capacitor 108 and the resistor 110. The exemplary component values given above yield a 3 dB point at approximately 1.7 Hz for the low pass filter 130. The output of the low pass filter 130 then passes through the high pass filter 132 with a 3 dB point at 0.3 Hz. The output of the high pass filter 132 then passes through the low pass filter 134 with a 3 dB point at approximately 8.0 Hz before entering the threshold circuit 136. The threshold circuit 136 provides a variable threshold for the detection of motion based on an input voltage input V_{threshold} which is adjusted to control the sensitivity of the circuit 100. In one aspect, V_{threshold} may be adjusted by the EPL circuitry 52 based on a received command. In another aspect, V_{threshold} may be fixed for a given EPL.

An output Vₘₒₜᵢₒₙ is set to a non-zero value when motion is detected and is set to 0 V when no motion is detected. The Vₘₒₜᵢₒₙ output is utilized by the EPL circuitry 52 to control the display of information messages based on movement in an area near the EPL 22. In one aspect of the present invention, "motion" typically occurs when a customer is simply standing in front of the EPL 22. Generally, it would be extremely difficult for a customer to remain absolutely motionless and thus customer "presence" may suitably be detected by the EPL 22 even when the customer is merely reading the series of messages displayed and moving his or her head, or arms, or shifting weight from one foot to another, or the like.

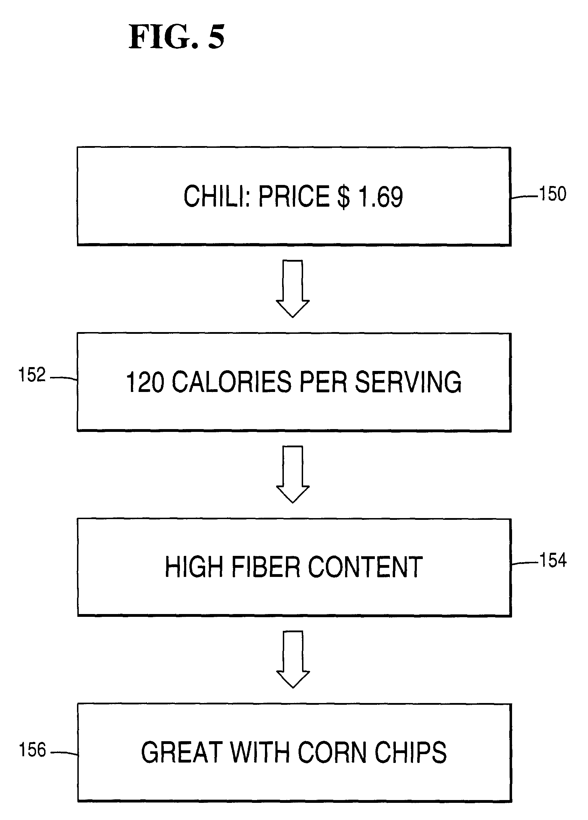

Fig. 5 shows an exemplary series of dynamic messages displayed by EPL 22 based on movement in an area near the EPL. A default message 150 is displayed when no movement is detected by the EPL 22. When movement has been detected, the EPL then displays a first information message 152. If the EPL continues to detect movement, a second information message 154 is displayed. Further movement in the area near the EPL results in the EPL displaying a third information message 156. The present invention advantageously allows a retailer to display targeted advertising and informational messages to customers who are in an area near an EPL and in the process of making purchasing decisions.

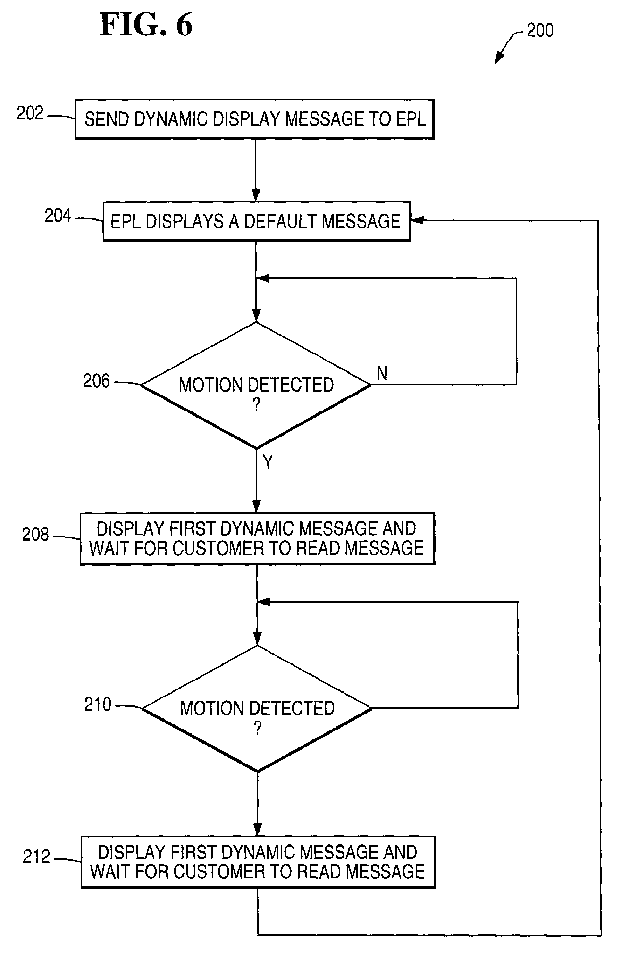

Fig. 6 shows a method 200 of displaying messages by an EPL based on customer movement in an area near the EPL in accordance with the present invention. While the method 200 will be described with the EPL displaying two dynamic messages for ease of illustration, the present invention is not so limited and may advantageously utilize a greater or smaller number of dynamic messages as desired. In step 202, a dynamic display program sends a dynamic display message to the EPL. The dynamic display message contains a dynamic information message or messages which may suitably contain collateral information relating to an item associated with the EPL. The dynamic display message may also include any associated timing parameters which define, for example, how long the EPL is to display a given information message or how long the EPL is to wait to rotate to the next message after detecting movement. In step 204, the EPL displays a default message, such as price or unit price. In step 206, the EPL waits for motion to be detected and continues to display the default message. When motion in an area near the EPL is detected, the method proceeds to step 208 where the EPL displays a first message and waits for a period of time for the customer to read the first message. In step 210, the EPL looks for continued motion. If no motion is present, the method proceeds to step 204 and the default message is displayed. If the EPL detects continued motion, the EPL displays a second message in step 212 and waits for a period of time for the customer to read the second message. The method then proceeds to step 204 and the default message is displayed.

It will be apparent to those skilled in the art that various modifications and variations can be made without departing from the scope of the present invention.

## Claims

1. An electronic price label (EPL) comprising:
a display;
motion sensing circuitry for sensing movement;
memory for storing a plurality of messages to be displayed by said display; and
circuitry for determining which of said plurality of messages is to be displayed by said display based upon motion sensing data obtained from said motion sensing circuitry.

2. An electronic price label as claimed in claim 1, wherein the plurality of messages includes price information of an item associated with the EPL.

3. An electronic price label as claimed in claim 1, wherein the plurality of messages includes promotional information relating to an item associated with the EPL.

4. An electronic price label as claimed in any of claims 1 to 3 wherein:
a first message is displayed when motion is not sensed; and
the second message is displayed when motion is sensed.

5. An electronic price label as claimed in claim 4, wherein the memory is arranged to store a timing parameter which defines how long the second message is to be displayed when motion is sensed.

6. An electronic price label (EPL) system comprising:
an EPL comprising a display, motion sensing circuitry for sensing movement, memory for storing a plurality of messages to be displayed by said display, circuitry for determining which of said plurality of messages is to be displayed by said display based upon motion sensed by said motion sensing circuitry; and
an EPL computer which sends a dynamic display message to the EPL, said dynamic display message including at least one of said plurality of messages to be displayed based upon motion sensed by said motion sensing circuitry.

7. A system as claimed in claim 6 wherein the electronic price label is located on a shelf adjacent to an item and the motion sensing circuitry is for sensing motion of a customer located in the vicinity of the electronic price label.

8. A display method for an electronic price label (EPL) comprising the steps of:
displaying a first message on the electronic price label;
detecting motion adjacent the electronic price label; and
displaying a second message on the electronic price label when said motion has been detected.

9. A method as claimed in claim 8, comprising after the step of sensing motion, the step of:
waiting for a predetermined time period.
